# EUROPEAN PATENT SPECIFICATION

(11) **EP 0 512 517 B1**
(45) Date of publication and mention of the grant of the patent: **19.07.1995**
(21) Application number: 92107654.3
(22) Date of filing: 06.05.1992
(51) Int. Cl.: B60N 2/36

(54) **Seat folding device**
Sitz-Umklappvorrichtung
Dispositif pour plier un siège

(30) Priority: 10.05.1991 JP 32119/91 U
(43) Date of publication of application: 11.11.1992
(73) Proprietor: FUJI KIKO CO., Ltd., Chuo-ku Tokyo (JP); Ikeda Bussan Co., Ltd., Ayase-shi Kanagawa-ken (JP)
(72) Inventor: Nakamura, Shinya, c/o Washizu Plant, Kosai City, Shizuoka Prefecture (JP); Komohara, Minoru, c/o Gifu Plant, Fuwa-gun, Gifu Prefecture (JP)
(74) Representative: TER MEER STEINMEISTER & PARTNER GbR

(56) References cited:
- EP-A- 0 410 814
- FR-A- 2 484 809
- US-A- 4 484 776
- US-A- 4 606 577
- US-A- 4 627 656
- US-A- 4 932 706

## Description

The invention relates to a seat folding device according to the preamble of claim 1.

One example of a seat folding device is disclosed by the US-A 4 484 776. According to this document, a seat is pivotally connected to the floor by means of a laterally extending axis below the front portion of the seat base. A hook member controlled by a lever is used to release the rear part of the seat from the floor, to pivot the complete seat in forward direction. When the rear part of the seat is lifted from the floor, the seatback is unlocked through a spring biased Bowden cable automatically, so that the seatback may be pivoted in forward direction with respect to the seat base.

In commercial cars, such as, trucks, one-box cars, delivery vans or the like, seats having the above-mentioned seat folding device are widely used for increasing, upon requirement, the space for loading cargo. Some of the seat folding devices of such type use wires as essential parts for transmitting movement of one part to another part. However, due to the nature of the wire, manipulation of the seat folding device sometimes induces ill-timed operation of the two parts, which tends to cause ill-smoothed folding movements of the seatback and the seat base. Furthermore, some of the devices of such type are bulky in size and heavy in weight.

It is therefore an object of the present invention to provide a seat folding device which is free of the above-mentioned drawbacks.

To comply with this object, a seat folding device according to the invention is characterized by the features of claim 1.

Additional features of the invention may be taken from the subclaims.
Fig. 1 is a partially cut front view of a seat folding device of the present invention;
Fig. 2 is a bottom view of the seat folding device of the invention;
Fig. 3 is a partially cut side view of the seat folding device of the invention; and
Fig. 4 is an enlarged sectional view taken along the line A-A of Fig. 2.

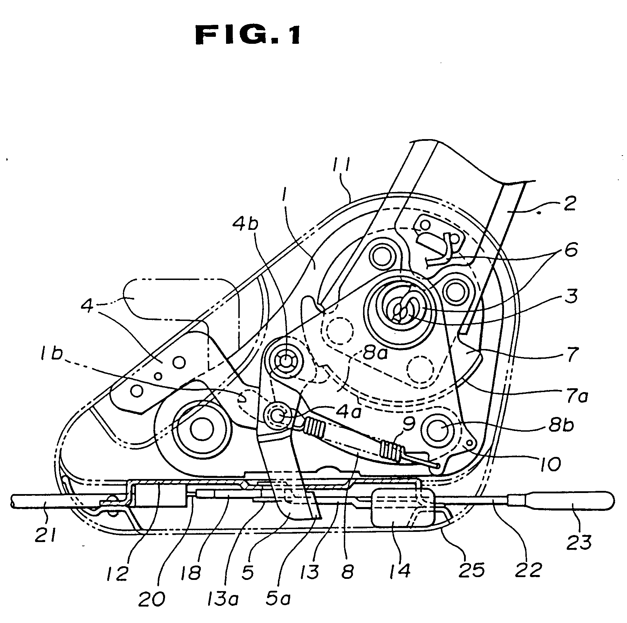

Referring to Figs. 1 to 4, particularly Fig. 1, there is shown a seat folding device of the present invention.

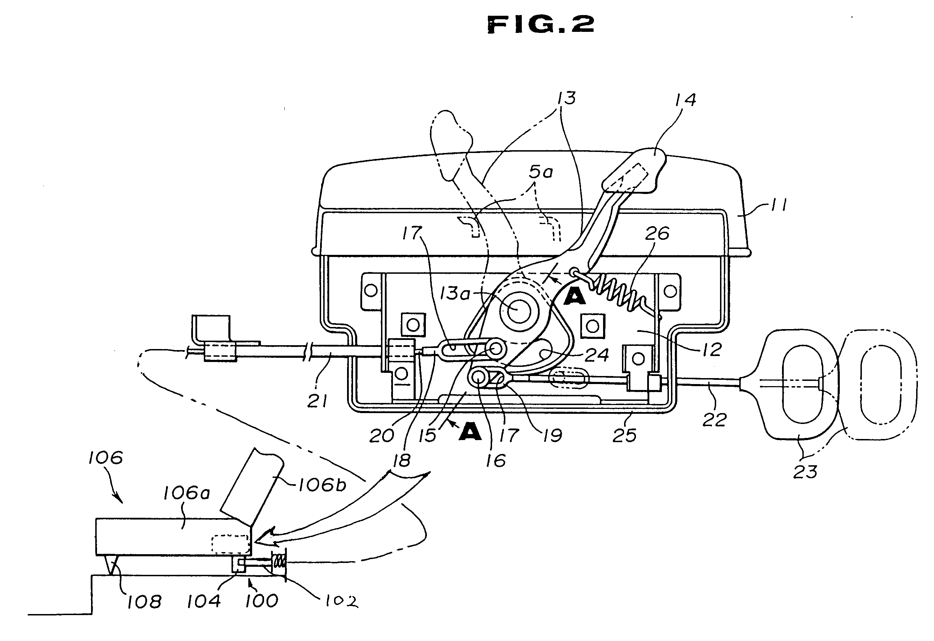

The seat folding device comprises a base plate 1 which is secured to a side rear part of a seat base 106a (see Fig. 2). Designated by numeral 2 is a reclining arm which has a lower end pivotally connected to the base plate through a pivot shaft 3. The reclining arm 2 is secured to one side of a seatback 106b (see Fig. 2). Thus, the seatback 106b is pivotally movable about the axis of the pivot shaft 3 relative to the seat base 106a. Designated by numeral 6 is a return spring which biases the reclining arm 2 forward, that is, in a counter-clockwise direction in Fig. 1.

Designated by numeral 4 is a generally Z-shaped main lever which is pivotal about a pivot pin 4b connected to the base plate 1. The main lever 4 has a roller pin 4a mounted thereto. The roller pin 4a has a head which is slidably engaged with an arcuate slot 1b formed in the base plate 1. The arcuate slot 1b is concentric with the pivot pin 4b of the main lever 4. As will be described hereinafter, this main lever 4 is used for adjusting the angle of the reclining arm 2 relative to the base plate 1.

Designated by numeral 5 is a generally I-shaped auxiliary lever which is pivotal also about the pivot pin 4b and lies over but partially the main lever 4. The roller pin 4a of the main lever 4 is connected to the auxiliary lever 5, so that the main lever 4 and the auxiliary lever 5 can pivot together about the pivot pin 4b.

A sector gear 7 is secured to the lower end of the reclining arm 2 to pivot therewith about the axis of the pivot shaft 3. The toothed periphery of the sector gear 7 is denoted by numeral 7a, which is shaped to be concentric with the pivot shaft 3.

Selectively engaged with the sector gear 7 (more specifically, the toothed periphery 7a of the sector gear 7) is a latch arm 8 which is pivotally connected to the base plate 1 through a pivot pin 8b. For this latched engagement, the latch arm 8 has a projected toothed portion 8a.

The latch arm 8 has a back edge which is contactable with the roller pin 4a, so that a pivotal movement of the roller pin 4a about the pivot pin 4b induces engagement or disengagement between the latch arm 8 and the sector gear 7, as will become apparent hereinafter.

Designated by numeral 10 is a triangular holder plate which is secured to the base plate 1 to define therebetween a given space in which the toothed periphery 7a of the sector gear 7 and the projected toothed portion 8a of the latch arm 8 are contained, as shown.

Designated by numeral 9 is a return spring which extends between the roller pin 4a and a part of the holder plate 10, for biasing the auxiliary lever 5 in a counterclockwise direction in Fig. 1 about the pivot pin 4b.

As is seen from Figs. 1 and 2, a cover 11 is mounted to the base plate 1 to cover the above-mentioned parts. The cover 11 has a lower portion from which a rectangular plate 12 extends perpendicular to the base plate 1. Although not shown in the drawings, the rectangular plate 12 is secured to a frame of the seat base 106a.

As is understood from Fig. 2, the rectangular plate 12 has at its generally middle part a raised portion to which a release lever 13 is connected through a pivot shaft 13a. Thus, the release lever 13 can pivot about the pivot shaft 13a horizontally, that is, over a plane perpendicular to the base plate 1. The raised portion of the rectangular plate 12 is formed with an arcuate slot 24 which is concentric with the pivot shaft 13a.

The release lever 13 has at its outer end a knob 14 fixed thereto. The release lever 13 is engageable at its shank portion with a lower end 5a of the auxiliary lever 5. That is, when the release lever 13 is pivoted by a certain degree in a counterclockwise direction in Fig. 2, the shank portion of the release lever 13 pushes and thus pivots the auxiliary lever 5 in a clockwise direction in Fig. 1.

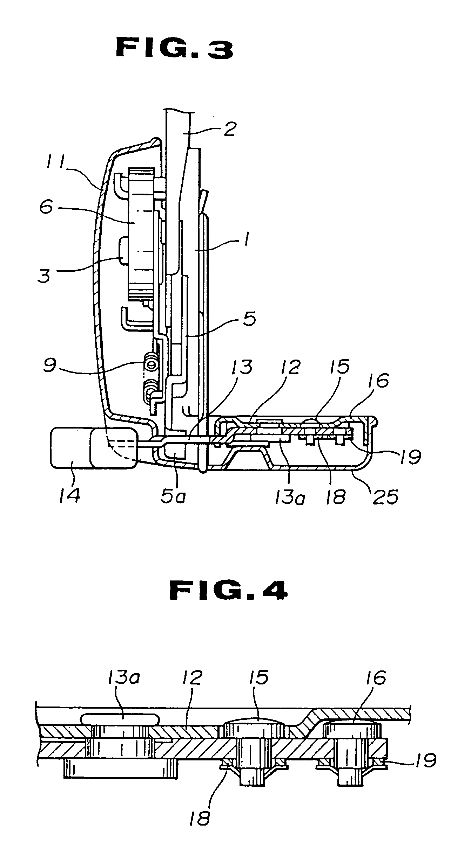

As is seen from Figs. 2 and 4, the release lever 13 has at its inner end portion first and second pins 15 and 16 secured thereto. As shown, the distance between the first pin 15 and the pivot shaft 13a is shorter than that between the second pin 16 and the pivot shaft 13a. It is to be noted that the first pin 15 has a head slidably engaged with the afore-mentioned arcuate slot 24 of the raised portion of the rectangular plate 12.

Engaged with the first pin 15 is a wire connector 18 to which a wire 20 from an after-mentioned known seat lock mechanism 100 (see Fig. 2) is connected. To permit a slidable movement of the connector 18 relative to the first pin 15, the connector 18 is formed with an elongate slot 17. The wire 20 is received in a tube 21.

Engaged with the second pin 16 is another wire connector 19 to which another wire 22 is connected. Also, the wire connector 19 is formed with an elongate slot 17. A grip member 23 is fixed to the terminal end of the wire 22. As shown, the two wires 20 and 22 extend in the opposite directions from the associated pins 15 and 16. Upon assembly, the grip member 23 is so arranged as to be manipulated by a rear seat passenger.

Designated by numeral 26 is a return spring which extends between the release lever 13 and the rectangular plate 12 to bias the release lever 13 in a clockwise direction in Fig. 2.

As is seen from Fig. 3, a cover 25 is arranged to cover the inner end portion of the release lever 13 and its associated parts 15, 16, 18, 19 and 26.

As is seen from Fig. 2, the seat lock mechanism 100 comprises a spring-biased lock pawl 102 which is lockingly engageable a lock hole formed in a lug 104 secured to the seat base 106a. Thus, when, due to pulling of the wire 20, the lock pawl 102 is disengaged from the lock hole of the lug 104, the seat assembly 106 is permitted to pivot forward about its pivot portion 108. Seat assemblies having such seat lock mechanism are disclosed in US Patent 4,869,541 and US Patent 4,913,494.

In the following, operation of the seat folding device of the invention will be described with reference to the drawings.

For ease of understanding, the description will be commenced with respect to a rest condition of the seat folding device.

Under this rest condition, the parts assume the positions as shown by the solid lines. That is, as is seen from Fig. 1, the latch arm 8 engages the sector gear 7 to cause the reclining arm 2, and thus, the seatback 106b to assume a desired angular position relative to the seat base 106a. Furthermore, as is seen from Fig. 2, the release lever 13 assumes the rearmost position causing the lock pawl 102 of the seat lock mechanism 100 to lockingly engage with the lock hole of the lug 104. Thus, the seat assembly 106 assumes its operative position in which the seat base 106a is locked to the vehicle floor with the seatback 106b locked at the desired angular position.

When now the release lever 13 is manipulated by, for example, an operator's hand to pivot forward against the biasing force of the return spring 26, the lever 13 pushes the lower end 5a of the auxiliary lever 5, as is understood from Fig. 2. Thus, the auxiliary lever 5 and thus the main lever 4 are pivoted about the pivot pin 4b in a clockwise direction in Fig. 1. With this, the roller pin 4a is turned in the same direction cancelling the latched engagement of the latch arm 8 with the the sector gear 7. Thus, the seatback 106b (viz., the reclining arm 2) is pivoted forward, that is, in a counterclockwise direction in Fig. 1 about the pivot shaft 3 due to the biasing force of the return spring 6. Thus, the seatback 106b is finally folded on the seat base 106a.

As is seen from Fig. 2, due to the forward pivoting of the release lever 13 about the pivot shaft 13a, the wire 20 pulls the lock pawl 102 of the seat lock mechanism 100. Thus, when a suitable external force is applied to the seat assembly 106 in a direction to raise the same, the assembly 106 is pivoted forward about the pivot portion 108 with the seatback 106b kept folded on the seat base 106a. That is, the seat assembly 106 now takes its fully folded condition.

When now the release lever 13 is released from the operator's hand, the lever 13 is returned to the rest position, as shown by the solid line in Fig. 2, due to the force of the return spring 26, and the main and auxiliary levers 4 and 5 are returned to their rest positions as shown by the solid line in Fig. 1, due to the force of the return spring 9. Of course, even in this case, the seat assembly 106 keeps the fully folded condition. It is to be noted that in this fully folded condition, the projected toothed portion 8a of the latch arm 8 is mated with a smoothed forward part of the sector gear 7, and thus the latched engagement therebetween is not provided.

When now an external force is applied to the fully folded seat assembly 106, the entire of the seat assembly 106 is pivoted rearward to a position wherein the seat base 106a is normally put on the vehicle floor with the seatback 106b kept folded on the seat base 106a. Upon this, the lock pawl 102 of the seat lock mechanism 100 is slid into the lock hole of the lug 104 thereby locking the seat assembly 106 (more specifically, the seat base 106a) to the vehicle floor.

When then an external force is applied to the seatback 106b in a direction to raise the same, the same (viz., the reclining arm 2) is pivoted rearward and finally comes to an angular position where the projected toothed portion 8a of the latch arm 8 is engaged with a foremost group of the teeth of the toothed periphery 7a of the sector gear 7 to establish the latched engagement between the latch arm 8 and the sector gear 7.

When then the main lever 4 is pulled up, the roller pin 4a fixed to the lever 4 is forced to turn about the pivot pin 4b in a clockwise direction in Fig. 1 thereby cancelling the latched engagement between the latch arm 8 and the sector gear 7. (It is to be noted that the pull-up motion of the main lever 4 does no effect on the release lever 13, and thus, the locked engagement of the seat base 106a to the vehicle floor is unchanged.) Thus, the seatback 106b can be pivoted to a new desired angular position with the main lever 4 kept pulled up. When the seatback 106b comes to the desired angular position, the main lever 4 is released from the operator's hand. With this, the roller pin 4a is turned in a counterclockwise direction about the pivot shaft 4b due to the force of the return spring 9 and brought into abutment with the back edge of the latch arm 8 causing the latched engagement of the latch arm 8 with the sector gear 7 at the desired angular position of the seatback 106b. Thus, the seat assembly 106 assumes its operative position.

When now the grip member 23 is pulled rearward, that is, rightward in Fig. 1, the release lever 13 is pivoted in a counterclockwise direction in Fig. 2 about the pivot shaft 13a. During the pivoting of the release lever 13, the same pushes the lower end 5a of the auxiliary lever 5, as is seen from the drawing. Thus, the auxiliary lever 5 and thus the main lever 4 are pivoted about the pivot pin 4b in a clockwise direction in Fig. 1. With this, the roller pin 4a is turned in the same direction cancelling the latched engagement of the latch arm 8 with the sector gear 7. Thus, the seatback 106b (viz., the reclining arm 2) is forced to pivot forward, that is, in a counterclockwise direction in Fig. 1 about the pivot shaft 3 due to the biasing force of the return spring 6. Thus, the seatback 106b is finally folded on the seat base 106a.

Due to the counterclockwise pivoting of the release lever 13 in Fig. 2, the wire 20 pulls the lock pawl 102 of the seat lock mechanism 10. Thus, when a suitable external force is applied to the seat assembly 106 in a direction to raise the same, the assembly 106 is pivoted forward about the pivot portion 108 with the seatback 106b kept folded on the seat base 106a. That is, the seat assembly 106 now takes its fully folded condition.

When now the grip member 23 is released from the operator's hand, the release lever 13 is returned to the rest position, as shown by the solid line in Fig. 2, due to the force of the return spring 26, and the main and auxiliary levers 4 and 5 are returned to their rest positions as shown by the solid line in Fig. 1, due to the force of the return spring 9.

## Claims

1. A seat folding device for use with a seat assembly (106) which has a seat base (106a) positioned on a floor portion and a seatback (106b) pivotally connected to said seat base through a pivot shaft (3), said seat folding device comprising pivot means for permitting said seat base (106a) to pivot about a pivot portion (108) relative to the floor portion, a seat lock mechanism (100, 102,104) for locking said seat base (106b) relative to said floor portion and latch means (7,8,7a,8a) for latching said seatback (106b) at a selected angular position relative to said seat base, a plurality of levers (4,5,13,23) being provided for releasing the seat lock mechanism and the latch means, **characterized** by a pivotal lever unit (5,4,4a) associated with said latch means (7,8, 7a,8a) to cancel the latched engagement of the seatback (106b) with respect to said seat base (106a) when pivoted in a given direction for adjusting seatback inclination; a release lever (13) being pivotally connected to said seatbase (106a), said release lever contacting and pivoting said pivotal lever unit in said given direction when pivoted in a first direction to cancel the latched engagement of the seatback and, on the other hand, releasing said lock mechanism (100) to unlock said seatbase (106a) relative to said floor portion through a first wire (20) connected to said release lever (13) and said lock mechanism (100), a grip member (23) extending to the rear of the seat assembly and being connected, through a second wire (22), to the release lever (13) on the side opposite to the first wire (20), so that, when said grip member (23) is pulled, said release lever is pivoted in said first direction.

2. A seat folding device as claimed in claim 1, **characterized** in that said latch means (7,8,7a,8a) comprises:
a sector gear (8) mounted to said seatback (106b) to pivot therewith; and
a latch pawl (7) pivotally connected to said seat base (1) and latchingly engageable with said sector gear.

3. A seat folding device as claimed in claim 2, **characterized** in that said pivotal lever unit (5,4,4a) comprises:
main and auxiliary levers (4,5) which are pivotal together about a common pivot pin (4b); and
a pin roller (4a) through which said main and auxiliary levers are connected, said pin roller pushing said latch pawl (7) in a direction to achieve the latched engagement of said latch pawl with said sector gear (7) when said main and auxiliary levers pivot in a direction opposite to said given direction.

4. A seat folding device as claimed in claim 3, **characterized** in that said main and auxiliary levers (4,5) are biased by a return spring (9) in the direction opposite to said given direction.

5. A seat folding device as claimed in claim 4, **characterized** in that said auxiliary lever (5) has a portion (5a) with which said release lever (13) is contactable.

6. A seat folding device as claimed in claim 5, **characterized** in that said release lever (13) is biased by a spring (26) in a second direction opposite to said first direction.

7. A seat folding device as claimed in claim 1, **characterized** by a return spring (6) which biases said seatback (106a) in a direction to be lowered to said seat base (106b).

8. A seat folding device as claimed in claim 1, **characterized** in that an axis (13a) about which said release lever (13) pivots is perpendicular to another axis (46) about which said pivotal lever unit (5,4,4a) pivots.

9. A seat folding device as claimed in claim 1, **characterized** in that said first and second wires (20,22) are respectively connected to first and second pins (15,16) secured to said release lever (13), the distance between said first pin and a pivoted portion of said release lever being shorter than the distance between said second pin and said pivoted portion of the release lever.

10. A seat folding device as claimed in claim 9, **characterized** in that said fist pin (15) has a head portion which is slidably engaged with an arcuate slot (24) formed in a plate (12) secured to said seat base, said arcuate slot being concentric with the pivoted portion of said release lever (13).

11. A seat folding device as claimed in claim 10, **characterized** in that said release lever (13) is pivotally connected to a raised portion of said plate (12), and in which said arcuate slot (24) is formed in said raised portion.

## Patentansprüche

1. Sitz-Umklappvorrichtung für eine Sitzanordnung (106) mit einer Sitzbasis (106a), die auf einem Bodenbereich angeordnet ist, und einer Rückenlehne (106b), die schwenkbar mit der Sitzbasis über eine Gelenkachse (3) verbunden ist, welche Sitz-Umklappvorrichtung eine Schwenkeinrichtung, die es gestattet, die Sitzbasis (106a) um einen Schwenkbereich (108) in bezug auf den Bodenbereich zu schwenken, einen Sitz-Verriegelungsmechanismus (100,102,104) zum Verriegeln der Sitzbasis (106b) in bezug auf den Bodenbereich und eine Klinkeneinrichtung (7,8,7a,8a) zum Verriegeln der Rückenlehne (106b) in einer ausgewählten Winkelstellung in bezug auf die Basis umfaßt, wobei eine Anzahl von Hebeln (4,5,13,23) vorgesehen ist zum Lösen des Sitz-Verriegelungsmechanismus und der Klinkeneinrichtung, **gekennzeichnet** durch eine Schwenkhebeleinheit (5,4,4a) in Verbindung mit der Klinkeneinrichtung (7,8,7a,8a) zum Aufheben des Verriegelungseingriffs der Rückenlehne (106b) in bezug auf die Sitzbasis (106a) beim Schwenken in eine vorgegebene Richtung zur Einstellung der Neigung der Rückenlehne; einen Auslösehebel (13), der schwenkbar mit der Sitzbasis (106a) verbunden ist und die Schwenkhebeleinheit berührt und in die vorgegebene Richtung schwenkt, wenn er in eine erste Richtung zur Aufhebung des Verriegelungseingriffs der Rückenlehne geschwenkt wird, und andererseits den Verriegelungsmechanismus (100) auslöst zum Entriegeln der Sitzbasis (106a) in bezug auf den Bodenbereich über einen ersten Draht (20), der mit dem Auslösehebel (13) und dem Verriegelungsmechanismus (100) verbunden ist, ein Griffglied (23), das sich nach rückwärts in bezug auf die Sitzanordnung erstreckt und über einen zweiten Draht (22) mit dem Auslösehebel (13) auf der Seite gegenüber dem ersten Draht (20) verbunden ist, so daß beim Ziehen des Griffgliedes (23) der Auslösehebel in die erste Richtung geschwenkt wird.

2. Sitz-Umklappvorrichtung nach Anspruch 1, dadurch **gekennzeichnet**, daß die Klinkeneinrichtung (7,8,7a,8a) umfaßt:
- einen Zahnradsektor (8), der an der Rückenlehne (106b) angebracht und mit der Rückenlehne schwenkbar ist; und
- eine Klinkenklaue (7), die schwenkbar mit der Sitzbasis (1) verbunden ist und in den Zahnradsektor einrasten kann.

3. Sitz-Umklappvorrichtung nach Anspruch 2, dadurch **gekennzeichnet**, daß die Schwenkhebeleinheit (5,4,4a) umfaßt:
- Haupt- und Hilfshebel (4,5), die gemeinsam um einen gemeinsamen Achsstift (4b) schwenkbar sind; und
- eine Stiftrolle (4a), über die der Haupt- und Hilfshebel verbunden sind, welche Stiftrolle die Klinkenklaue (7) in eine Richtung drückt, in der der Klinkeneingriff der Klinkenklaue mit dem Zahnradsektor (7) hergestellt wird, wenn der Haupt- und Hilfshebel in Richtung entgegengesetzt zu der vorgegebenen Richtung geschwenkt wird.

4. Sitz-Umklappvorrichtung nach Anspruch 3, dadurch **gekennzeichnet**, daß der Haupt- und Hilfshebel (4,5) durch eine Rückholfeder (9) in Richtung entgegengesetzt zu der vorgegebenen Richtung vorgespannt sind.

5. Sitz-Umklappvorrichtung nach Anspruch 4, dadurch **gekennzeichnet**, daß der Hilfshebel (5) einen Abschnitt (5a) aufweist, mit dem der Auslösehebel (13) verbindbar ist.

6. Sitz-Umklappvorrichtung nach Anspruch 5, dadurch **gekennzeichnet**, daß der Auslösehebel (13) durch eine Feder (26) in eine zweite Richtung entgegengesetzt zu der ersten Richtung vorgespannt ist.

7. Sitz-Umklappvorrichtung nach Anspruch 1, **gekennzeichnet** durch eine Rückholfeder (6), die die Rückenlehne (106a) in Richtung einer Absenkung auf die Sitzbasis (106b) vorspannt.

8. Sitz-Umklappvorrichtung nach Anspruch 1, dadurch **gekennzeichnet**, daß eine Achse (13a), um die der Auslösehebel (13) schwenkbar ist, senkrecht zu einer anderen Achse (46) steht, um die die Schwenkhebeleinheit (5,4,4a) schwenkbar ist.

9. Sitz-Umklappvorrichtung nach Anspruch 1, dadurch **gekennzeichnet**, daß der erste und zweite Draht (20,22) mit ersten und zweiten Stiften (15,16) verbunden sind, die an dem Auslösehebel (13) befestigt sind, wobei der Abstand zwischen dem ersten Stift und dem schwenkbar gelagerten Bereich des Auslösehebels kleiner ist als der Abstand zwischen dem zweiten Stift und dem schwenkbar gelagerten Bereich des Auslösehebels.

10. Sitz-Umklappvorrichtung nach Anspruch 9, dadurch **gekennzeichnet**, daß der erste Stift (15) einen Kopfbereich aufweist, der gleitend in einen bogenförmigen Schlitz (24) in einer Platte (12) eingreift, die an der Sitzbasis befestigt ist, welcher bogenförmige Schlitz konzentrisch zu dem schwenkbar gelagerten Bereich des Auslösehebels (13) liegt.

11. Sitz-Umklappvorrichtung nach Anspruch 10, dadurch **gekennzeichnet**, daß der Auslösehebel (13) schwenkbar mit einem erhöhten Bereich der Platte (12) verbunden ist und daß der bogenförmige Schlitz (24) in dem erhöhten Bereich ausgebildet ist.

## Revendications

1. Dispositif pour plier un siège prévu pour être utilisé avec un ensemble de siège (106) qui comporte une base de siège (106a) positionnée sur une partie de plancher et un dossier de siège (106b) relié de façon pivotante à ladite base de siège par un arbre de pivot (3), ledit dispositif pour plier un siège comprenant un moyen formant pivot pour permettre à ladite base de siège (106a) de pivoter autour d'une partie de pivotement (108) relativement à la partie de plancher, un mécanisme de verrouillage de siège (100, 102, 104) pour verrouiller ladite base de siège (106b) relativement à ladite partie de plancher et un moyen formant loquet (7, 8, 7a, 8a) pour verrouiller ledit dossier de siège (106b) à une position angulaire choisie relativement à ladite base de siège, plusieurs leviers (4, 5, 13, 23) étant prévus pour relâcher le mécanisme de verrouillage de siège et le moyen Formant loquet, caractérisé par une unité de leviers pivotants (5, 4, 4a) associés audit moyen de loquet (7, 8, 7a, 8a) pour supprimer la mise en prise de verrouillage du dossier de siège (106b) relativement à ladite base de siège (106a) lorsqu'elle est pivotée dans une direction donnée pour régler l'inclinaison du dossier de siège ; un levier de relâchement (13) étant relié de façon pivotante à ladite base de siège (106a), ledit levier de relâchement contactant et faisant pivoter ladite unité de leviers pivotants dans ladite direction donnée lorsqu'elle est pivotée dans une première direction pour supprimer la mise en prise de verrouillage du dossier et, d'autre part, relâchant ledit mécanisme de verrouillage (100) pour déverrouiller ladite base de siège (106a) relativement à ladite partie de plancher par un premier fil (20) relié audit levier de relâchement (13) et ledit mécanisme de verrouillage (100), un élément formant poignée (23) s'étendant à l'arrière de l'ensemble de siège et étant connecté, par un deuxième fil (22) au levier de relâchement (13) sur le côté opposé au premier fil (20) de façon que lorsqu'une traction est exercée sur ledit élément formant poignée (23), ledit levier de relâchement est pivoté dans ladite première direction.

2. Dispositif pour plier un siège selon la revendication 1, caractérisé en ce que ledit moyen de loquet (7, 8, 7a, 8a) comprend :
un secteur denté (8) monté sur ledit dossier de siège (106b) pour pivoter avec celui-ci ; et
un cliquet de verrouillage (7) relié de façon pivotante à ladite base de siège (1) et pouvant être mis en prise de verrouillage avec ledit secteur denté.

3. Dispositif pour plier un siège selon la revendication 2, caractérisé en ce que ladite unité de leviers pivotants (5, 4, 4a) comprend :
des leviers principal et auxiliaire (4, 5) qui peuvent pivoter ensemble autour d'un axe de pivot commun (4b) ; et
un rouleau d'axe (4a) par lequel lesdits leviers principal et auxiliaire sont connectés, ledit rouleau d'axe poussant ledit cliquet de verrouillage (7) dans une direction pour provoquer la mise en prise de verrouillage dudit cliquet de verrouillage avec ledit secteur denté (7) lorsque lesdits leviers principal et auxiliaire pivotent dans une direction opposée à ladite direction donnée.

4. Dispositif pour plier un siège selon la revendication 3, caractérisé en ce que lesdits leviers principal et auxiliaire (4, 5) sont sollicités par un ressort de rappel (9) dans la direction opposée à ladite direction donnée.

5. Dispositif pour plier un siège selon la revendication 4, caractérisé en ce que ledit levier auxiliaire (5) comporte une partie (5a) avec laquelle ledit levier de relâchement (13) peut être connecté.

6. Dispositif pour plier un siège selon la revendication 5, caractérisé en ce que ledit levier de relâchement (13) est sollicité par un ressort (26) dans une deuxième direction opposée à ladite première direction.

7. Dispositif pour plier un siège selon la revendication 1, caractérisé par un ressort de rappel (6) qui sollicite ledit dossier de siège (106a) dans une direction d'abaissement vers ladite base de siège (106b).

8. Dispositif pour plier un siège selon la revendication 1, caractérisé en ce qu'un axe (13a) autour duquel ledit levier de relâchement (13) pivote, est perpendiculaire à un autre axe (46) autour duquel ladite unité de leviers pivotants (5, 4, 4a) pivote.

9. Dispositif pour plier un siège selon la revendication 1, caractérisé en ce que lesdits premier et deuxième fils (20, 22) sont respectivement reliés à des première et deuxième goupilles (15, 16) fixées audit levier de relâchement (13), la distance entre ladite première goupille et une partie pivotée dudit levier de relâchement étant plus courte que la distance entre ladite deuxième goupille et ladite partie pivotée du levier de relâchement.

10. Dispositif pour plier un siège selon la revendication 9, caractérisé en ce que ladite première goupille (15) comporte une partie de tête qui est en prise de coulissement avec une fente arquée (24) formée dans une plaque (12) fixée à ladite base de siège, ladite fente arquée étant concentrique avec la partie pivotée dudit levier de relâchement (13).

11. Dispositif pour plier un siège selon la revendication 10, caractérisé en ce que ledit levier de relâchement (13) est relié de façon pivotante à une partie relevée de ladite plaque (12), et dans lequel ladite fente arquée (24) est ménagée dans ladite partie relevée.
